# EUROPEAN PATENT APPLICATION

(11) **EP 4 697 216 A1**
(43) Date of publication of application: **18.02.2026**
(21) Application number: 25195810.4
(22) Date of filing: 13.08.2025
(51) Int. Cl.: G06F 21/60, G06F 21/62, H04L 9/40

(54) **DYNAMIC VERIFICATION OF USER CONSENT FOR DATA ACCESS**

(30) Priority: 16.08.2024 US 202463683739 P; 01.05.2025 US 202519195847
(71) Applicant: Google LLC, Mountain View, CA 94043 (US)
(72) Inventor: JOG, Rohit Vijay, Mountain View, California, 94043 (US); HELD, David, Mountain View, California, 94043 (US); KORN, Jeffrey, Mountain View, California, 94043 (US); JOSEPH, Joshy, Mountain View, California, 94043 (US); REPESHKO, Vitaly, Mountain View, California, 94043 (US); DEUTSCHER, David, Mountain View, California, 94043 (US)
(74) Representative: Betten & Resch

(57) **Abstract**

Aspects of the disclosure are directed to dynamic verification of user consent for data access. Each piece of data stored in a database includes information associated with a user and which applications that user consented to accessing the respective piece of data. As part of online access or offline access, an application may request access to a piece of data associated with a user. In response to the access request, the database verifies whether that application has consent to access the piece of data using the information associated with which applications a user consented to accessing the piece of data. If the information includes a consent, the database allows access. If the information includes a denial or does not include a consent, the database denies access. The dynamic verification allows for access enforcement with lower process cost and memory usage, as consent information is added to the data itself and an access control list is no longer needed.

## Description

### CROSS-REFERENCE TO RELATED APPLICATIONS

The present application claims the benefit of the filing date of U.S. Provisional Patent Application No. 63/683,739, filed August 16, 2024, the disclosure of which is hereby incorporated herein by reference.

### BACKGROUND

An access control list (ACL) is a list of permissions associated with a computing resource, such as a database. The ACL specifies which users or computing processes may be granted access to the computing resource. The ACL may also specify what operations are allowed on the computing resource. For example, a file object containing ACL "user1: read, write; user2: read" specifies that user1 has permission to read and write the file while user2 has permission to read the file. However, an ACL-based approach to data access may not be feasible for large storage systems in circumstances where there is cross-process use of the data, e.g., multiple computing processes with different levels of operation access utilizing the data at the same time. The ACL-based approach can lead to incorrect policy enforcement results and/or increased processing cost and memory usage to ensure correct ACL enforcement.

### BRIEF SUMMARY

Aspects of the disclosure are directed to dynamic verification of user consent for data access. Each piece of data stored in a storage system, such as a database, includes information associated with a user and which applications that user consented to have access to a given piece of information or data, e.g., a datum, associated with the data. As part of online access or offline access, an application may request access to a piece of data associated with a user. In response to the access request, the storage system verifies whether that application has consent to access the piece of data using the information associated with which applications a user consented to accessing the piece of data. If the information includes a consent, the storage system allows access. If the information includes a denial or does not include a consent, the storage system denies access. The dynamic verification allows for access enforcement with lower process cost and memory usage, as consent information is added to the data itself and an access control list is no longer needed.

An aspect of the disclosure provides for a method for enforcing data access to run one or more applications in a cloud computing system, the method including: receiving, by one or more processors, a request by an application to access a piece of data in a storage system for use by the application; parsing, by the one or more processors, a token in the storage system associated with the piece of data that indicates which applications a user consented to accessing the piece of data; determining, by the one or more processors, whether the application has consent to access the piece of data based on the token; granting or denying, by the one or more processors, access to the piece of data based on the determination; and outputting, by the one or more processors, the grant or denial to access the piece of data.

Another aspect of the disclosure provides for a system including: one or more processors; and one or more storage devices coupled to the one or more processors and storing instructions that, when executed by the one or more processors, cause the one or more processors to perform operations for the method for enforcing data access. Yet another aspect of the disclosure provides for a non-transitory computer readable medium for storing instructions that, when executed by one or more processors, cause the one or more processors to perform operations for the method for enforcing data access. Yet another aspect of the disclosure provides for a computer program including instructions that, when executed by one or more processors, cause the one or more processors to perform operations for the method for enforcing data access.

In an example, the request is a read request or a write request for the piece of data. In another example, the application includes at least one of a video streaming application, a map generation application, a search application, or a digital content management application.

In yet another example, the token further includes which users consented to accessing the piece of data. In yet another example, the token is included as a column in table data.

In yet another example, the method further includes outputting a notification to request access to the piece of data as part of outputting the denial to access the piece of data. In yet another example, the method further includes periodically updating the token to update which applications a user consented to accessing the piece of data.

In yet another example, the storage system is a hierarchy of databases and the parsing, determining, and granting or denying are performed by one of the databases of the hierarchy. In yet another example, the other databases of the hierarchy honor the grant or denial without performing their own determination.

### BRIEF DESCRIPTION OF THE DRAWINGS

FIG. 1 depicts a block diagram of online traffic for dynamic verification of data access according to aspects of the disclosure.
FIG. 2 depicts a block diagram of offline traffic for updating data access according to aspects of the disclosure.
FIG. 3 depicts a block diagram of an example dynamic verification system according to aspects of the disclosure.
FIG. 4 depicts a block diagram of an example computing environment implementing a dynamic verification system according to aspects of the disclosure.
FIG. 5 depicts an example process for enforcing data access according to aspects of the disclosure.

### DETAILED DESCRIPTION

The technology generally relates to a user-context based dynamic verification of user consent for data access. A storage system, such as a database, stores user and application information with each piece of data. The information can further include which applications have consent to access respective pieces of data. Applications may include video streaming, map generation, digital content management, word processing, as examples. Read requests to the database are initiated as part of some active user interaction, such as online access, or some background processing pipeline, such as offline access. Whether online or offline, a request to the storage system is made in the context of an application. For example, online access may include a user accessing video streaming history while offline access may include the video streaming application curating a playlist for the user in the background. In response to the read requests, verification is performed for whether the user consented to the read-requesting application to access data. If the user has given consent, access is allowed. If the user has not given consent, access is denied. Dynamic verification of user consent for data access allows for policy enforcement with lower processing cost and memory usage, as the storage system can filter out data or reject the read request where access is denied.

The storage system can store attributes, e.g., security and/or privacy attributes, as tokens along with the data itself. The attributes can be used for enforcing the data access. An example token including the attributes is as follows: {Writing User: 'User1'; Writing Application: 'Application1'}.

An example storage system can be a database having three-dimensional tables, though other storage systems may be utilized as well, e.g., a file-based storage system, a cloud-based storage system, and/or a container-based storage system. The tables can include an unlimited number of rows and columns, plus a third dimension per cell referred to as a version or timestamp. Thus, a specific cell in this example database may be referenced by a tuple of values, e.g., row key, column key, timestamp values. The attributes may be included in the database as part of the tuple of values. Through the tokens, which users and/or applications can read and/or write data in a given table of the database can be defined. For any read and/or write request received by the database, the database can check the table configuration and validate if the application issuing the read and/or write request has consent to perform the respective operation. The tokens can be defined in extensible table configurations of the database, such as the following:

Table configurations: {Security properties: {Applications: {Can write: 'Application1', 'Application2', 'Application3'; Can read: 'Application2', 'Application4'}}}. These table configurations can be periodically updated offline via consent preferences.

Based on these example configurations, an example write request can include the following information: Write-Request-RPC: {Security properties: {write requesting user: 'User1'; write requesting application: 'Application4'}}. With this information, the database can run a policy check and reject the request. Even though the user "User1" is allowed to write the data, the application "Application4" is not.

If a new policy check passes, the database can create a token using the validated security properties in the RPC and persist the token with the data. Alternatively, or additionally, the database can accept a token from the write request sender and merge the security properties in the RPC in the validated token and then persist the security properties along with the data. A generated token may look like the following: Token: {Writing User: 'User1'; Writing Application: 'Application4'}. Storing of the tokens in the database may not be included if the table is configured where only applications are allowed to write data. In such an example, each data written in the table has a similar token but with a different identifier per user. The storage system may also include other storage optimization and/or cost saving implementations, such as deduplication if many of the tokens contain similar data.

At the time of reading, applications can pass the user consent via remote procedure calls (RPCs). An example read request RPC can be the following: Read-request-RPC: {Security properties: {User consent: {allow data read written by: 'Application1, 'Application2'} Read requesting user: 'User1' } }. With this, the database can check if the read should be allowed or not. The database has access to the token stored with data, which as an example can be as follows: Token: {Writing User: 'User1'; Writing Application: 'Application4'}. The database rejects this request because the user has given consent to read data written by "Application1" and "Application2" but the data for this token was written by "Application4". The security properties may include an access purpose in the consent, e.g., a reason for accessing the content. The database can further check if the read should be allowed or not based on the purpose in user consent. For example, a user may have access to a video for viewing purposes but not for advertisement purposes.

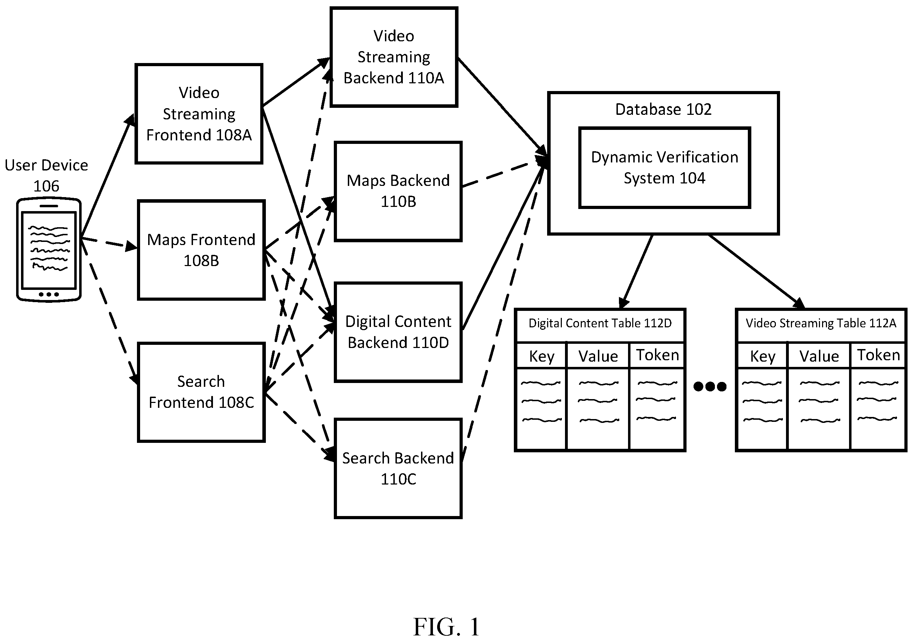

FIG. 1 depicts a block diagram of online traffic for dynamic verification of data access according to aspects of the disclosure. A storage system, such as a database 102, includes a dynamic verification system 104 for verifying the data access based on information included with each piece of data. The storage system, or more specifically database 102, can be part of a cloud computing system for cloud computing services such as infrastructure as a service, platform as a service, and/or software as a service.

For example, a user device 106 may use the cloud computing system as a service that provides software applications, such as accounting, word processing, inventory tracking, fraud detection, file sharing, video sharing, audio sharing, map generation, search, communication, and/or gaming. As another example, the user device 106 can access the cloud computing system as part of one or more operations that employ machine learning, deep learning, and/or artificial intelligence technology to train the software application. The cloud computing system can provide model parameters that can be used to update machine learning models for the software applications.

The storage system may include a plurality of storage systems layered in a hierarchy, such as a plurality of layers of databases. In such a hierarchy, only one of the storage systems may perform dynamic verification, where the other storage systems in the hierarchy can honor the results of that dynamic verification. This can save processing costs and memory usage, particularly for large storage systems. For example, for online accesses, a bottom-most storage system in the hierarchy can run the access verification and the other storage system in the hierarchy can honor the results from the bottom-most storage system while, for offline accesses, the bottom-most storage system can send data as is to the top-most storage system and the top-most storage system can run the access verification.

The software applications can include frontends 108 and backends 110, though some software applications may only include the backend 110. The frontends 108 are the presentation layer of the software applications and may be part of the user device 106 while the backends 110 are the data access layer and may include one or more server devices in one or more locations. As examples, FIG. 1 depicts a video streaming frontend 108A, a maps frontend 108B, and a search frontend 108C as well as a video streaming backend 110A, maps backend 110B, search backend 110C, and a digital content backend 110D, such as for presenting advertisements on one or more of the frontends 108.

As part of running the applications, a backend 110 sends read and/or write requests to the database 102 to access data for that backend 110. The dynamic verification system 104 can process the read and/or write requests by determining whether the user of the user device 106 has given consent for the backend 110 to access the data. The dynamic verification system 104 searches the relevant table of data, e.g., a digital content table 112D for the digital content backend 110D or a video streaming table 112A for the video streaming backend 110A. The dynamic verification system 104 may use keys to identify the data being requested. The dynamic verification system 104 uses tokens to determine whether the backend 110 has access to the data. The tokens include which users and/or which applications have read and/or write access. If the user has given consent to the read and/or write request, the dynamic verification system 104 allows access. If the user has not given consent, the dynamic verification system 104 denies access. The user may have given consent as part of a system setting identifying which applications the user is okay with having data accessed. Alternatively, or additionally, if access is denied, a notification may be provided to the user device 106 on the frontend, asking whether access can be granted.

For example, shown in solid lines in FIG. 1, a user of the user device 106 may run a video streaming application. The video streaming frontend 108A may present videos relevant to the user along with advertisements. To present these videos and advertisements, the video streaming backend 110A and digital content backend 110D may provide read requests to the database 102. In response to receiving the read requests, the dynamic verification system 104 determines whether the user has granted the video streaming application and/or the digital content application access to their data. The dynamic verification system 104 determines this based on tokens that are stored with the relevant data. The tokens include which users and which applications have access to the particular data. The tokens may also include for what purposes the users and/or applications have access to the particular data. If the user consented to read requests, the dynamic verification system 104 allows access. Based on the read requests, the video streaming backend 110A and digital content backend 110D provide the data to the video streaming frontend 108A. The video streaming frontend 108A presents the videos and advertisements to the user on the user device 106. Other examples are shown in dashed lines in FIG. 1 of other application backends requesting data from the database to provide to the respective application frontend.

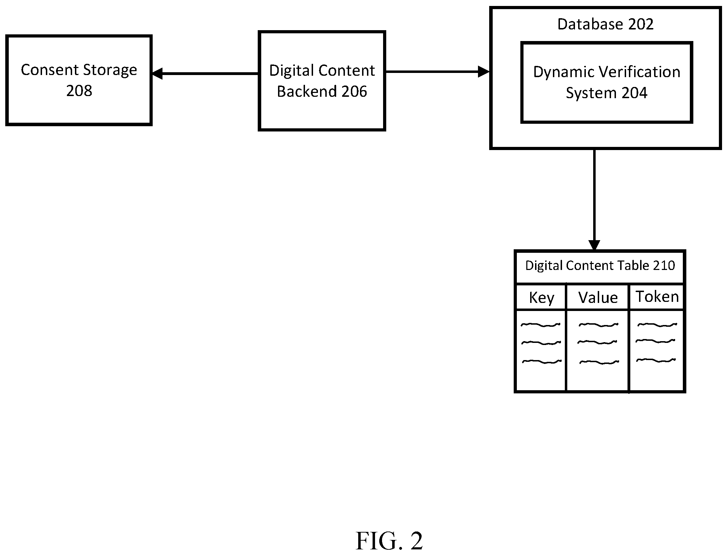

FIG. 2 depicts a block diagram of offline traffic for updating data access according to aspects of the disclosure. The database 202 and dynamic verification system 204 can respectively correspond to the database 102 and dynamic verification system 104 as depicted in FIG. 1. Periodically, e.g., once every 12 hours, once a day, or once a week, the dynamic verification system 204 is provided with access updates for the data stored in the database 202. One or more of the backends 206, such as the digital content backend, may access a consent storage 208. The consent storage 208 may store user consent preferences that describe which users and/or applications have access to which data of the database 202. Users may have provided these consent preferences as part of a system settings to identify which applications are allowed to access the user data. While shown as a separate storage system from the database 202 in FIG. 1, the consent storage 208 may be included as part of the database 202 in other examples. The backend 206 may provide user consent preferences to the dynamic verification system 204 for updating the tokens to the relevant tables 210 in the database, such as the digital content table. The periodic offline updating allows for data access settings to be as up to date as possible without constantly asking the users to provide data access settings or slowing down the applications with constant updating of the tokens.

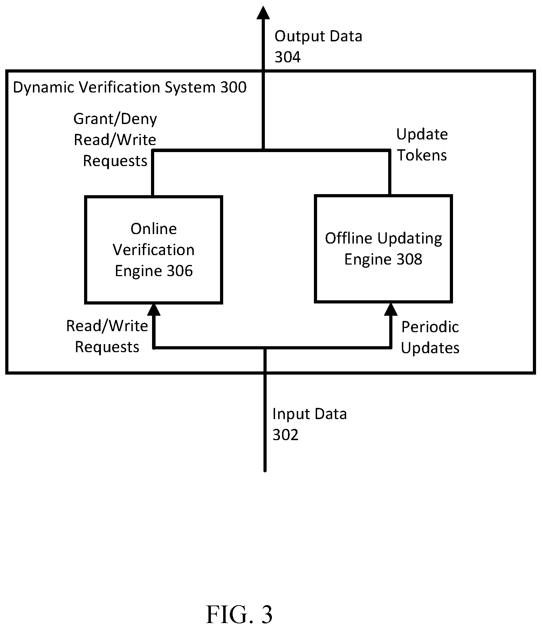

FIG. 3 depicts a block diagram of an example dynamic verification system 300 according to aspects of the disclosure. The dynamic verification system 300 can be implemented on one or more computing devices in one or more locations. The dynamic verification system 300 can correspond to the dynamic verification system 100 as depicted in FIG. 1.

The dynamic verification system 300 can be configured to receive input data 302. The input data 302 can include read and/or write requests for accessing data as part of running one or more applications. The input data 302 can further include periodic updates to the data accesses. The dynamic verification system 300 can receive the input data 302 from one or more backend servers. For example, the dynamic verification system 300 can receive the input data 302 as part of a call to an application programming interface (API) exposing the dynamic verification system 300 to one or more computing devices. The input data 302 can also be provided to the dynamic verification system 300 through a storage medium, such as remote storage connected to one or more computing devices over a network. The input data 302 can further be provided as input through a user interface on a user computing device coupled to the dynamic verification system 300.

From the input data 302, the dynamic verification system 300 can be configured to output one or more results generated as output data 304. The output data 304 can include an indication whether the read and/or write request for accessing data was granted or denied. The output data 304 can further include a notification to update data access if the request was denied. The output data 304 can also include tokens for updating the data accesses. As an example, the dynamic verification system 300 can be configured to send the output data 304 for display on a client or user display. As another example, the dynamic verification system 300 can be configured to provide the output data 304 as a set of computer-readable instructions, such as one or more computer programs. The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement functionality described herein, for example, as performed by a system, engine, module, or model. The dynamic verification system 300 can further be configured to forward the output data 304 to one or more other devices configured for translating the output data into an executable program written in a computer programming language. The dynamic verification system 300 can also be configured to send the output data 304 to a storage device for storage and later retrieval.

The dynamic verification system 300 can include an online verification engine 306 and an offline updating engine 308. The online verification engine 306 and the offline updating engine 308 can be implemented as one or more computer programs, specially configured electronic circuitry, or any combination thereof.

The online verification engine 306 can be configured to grant or deny access to data based on tokens as the applications are running. The online verification engine 306 can be configured to receive read and/or write requests as part of running one or more applications. The online verification engine 306 can determine whether to grant or deny the read and/or write requests based on tokens provided with the relevant pieces of data. The tokens can include which users and/or which applications can have access to the data. The tokens may also include for what purposes the users and/or applications can have access to the data. Based on the information in the token, the online verification engine 306 can grant or deny the read and/or write requests. For example, if the token provides only read access to an application, the online verification engine 306 can deny any write requests from that application.

The offline updating engine 308 can be configured to periodically update the tokens associated with the pieces of data. The offline updating engine 308 can receive consent data from a consent storage indicating which users and/or applications have access to which pieces of the data. The offline updating engine 308 can update the pieces of data by storing the token with the pieces of data to indicate which users and/or applications have access to this data. The offline updating engine 308 can periodically update data access every 12 hours or 24 hours, as examples.

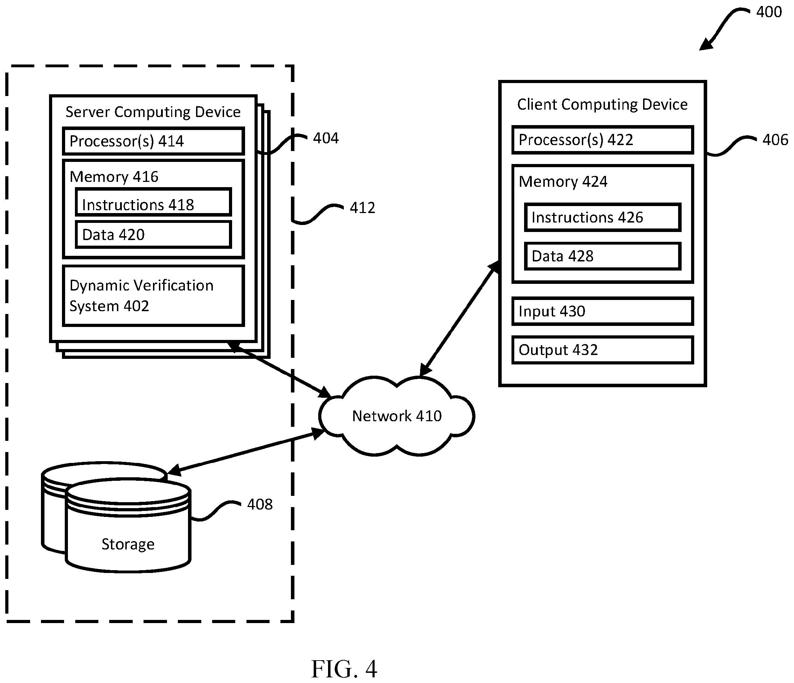

FIG. 4 depicts a block diagram of an example computing environment 400 implementing a dynamic verification system 402 for a cloud storage system. The dynamic verification system 402 can correspond to the dynamic verification system 100 as depicted in FIG. 1. The dynamic verification system 402 can be implemented on one or more devices having one or more processors in one or more locations, such as in a server computing device 404. A client computing device 406 and the server computing device 404 can be communicatively coupled to one or more storage devices 408 over a network 410. The server computing device 404 and the storage devices 408 can form part of a cloud computing system 412 for cloud computing services such as Infrastructure as a Service (IaaS), Platform as a Service (PaaS), and/or Software as a Service (SaaS).

The storage devices 408 can be a combination of volatile and non-volatile memory and can be at the same or different physical locations than the computing devices 404, 406. For example, the storage devices 408 can include any type of non-transitory computer readable medium (also referred to as computer program product). capable of storing information, such as a hard-drive, solid state drive, tape drive, optical storage, memory card, ROM, RAM, DVD, CD-ROM, write-capable, and read-only memories.

The server computing device 404 can include one or more processors 414 (also referred to as computer processors). and memory 416. The memory 416 can store information accessible by the processors 414, including instructions 418 that can be executed by the processors 414. The memory 416 can also include data 420 that can be retrieved, manipulated, or stored by the processors 414. The memory 416 can be a type of non-transitory computer readable medium capable of storing information accessible by the processors 414, such as volatile and non-volatile memory. The processors 414 can include one or more central processing units (CPUs), graphic processing units (GPUs), field-programmable gate arrays (FPGAs), and/or application-specific integrated circuits (ASICs), such as tensor processing units (TPUs).

The instructions 418 can include one or more instructions that when executed by the processors 414, cause the one or more processors to perform actions defined by the instructions 418. The instructions 418 can be stored in object code format for direct processing by the processors 414, or in other formats including interpretable scripts or collections of independent source code modules that are interpreted on demand or compiled in advance. The instructions 418 can include instructions for implementing the dynamic verification system 402. The dynamic verification system 402 can be executed using the processors 414, and/or using other processors remotely located from the server computing device 404.

The data 420 can be retrieved, stored, or modified by the processors 414 in accordance with the instructions 418. The data 420 can be stored in computer registers, in a relational or non-relational database as a table having a plurality of different fields and records, or as JSON, YAML, proto, or XML documents. The data 420 can also be formatted in a computer-readable format such as, but not limited to, binary values, ASCII, or Unicode. Moreover, the data 420 can include information sufficient to identify relevant information, such as numbers, descriptive text, proprietary codes, pointers, references to data stored in other memories, including other network locations, or information that is used by a function to calculate relevant data.

The client computing device 406 can also be configured similarly to the server computing device 404, with one or more processors 422, memory 424, instructions 426, and data 428. The client computing device 406 can also include a client input 430 and a client output 432. The client input 430 can include any appropriate mechanism or technique for receiving input from a client, such as keyboard, mouse, mechanical actuators, soft actuators, touchscreens, microphones, and sensors.

The server computing device 404 can be configured to transmit data to the client computing device 406, and the client computing device 406 can be configured to display at least a portion of the received data on a display implemented as part of the client output 432. The client output 432 can also be used for displaying an interface between the client computing device 406 and the server computing device 404. The client output 432 can alternatively or additionally include one or more speakers, transducers or other audio outputs, a haptic interface or other tactile feedback that provides non-visual and non-audible information to a client of the client computing device 406.

Although FIG. 4 illustrates the processors 414, 422 and the memories 416, 424 as being within the computing devices 404, 406, components described herein, including the processors 414, 422 and the memories 416, 424 can include multiple processors and memories that can operate in different physical locations and not within the same computing device. For example, some of the instructions 418, 426 and the data 420, 428 can be stored on a removable SD card and other instructions within a read-only computer chip. Some or all of the instructions 418, 426 and data 420, 428 can be stored in a location physically remote from, yet still accessible by, the processors 414, 422. Similarly, the processors 414, 422 can include a collection of processors that can perform concurrent and/or sequential operations. The computing devices 404, 406 can each include one or more internal clocks providing timing information, which can be used for time measurement for operations and programs run by the computing devices 404, 406.

The computing devices 404, 406 can be capable of direct and indirect communication over the network 410. The devices 404, 406 can set up listening sockets that may accept an initiating connection for sending and receiving information. The network 410 itself can include various configurations and protocols including the Internet, World Wide Web, intranets, virtual private networks, wide area networks, local networks, and private networks using communication protocols proprietary to one or more companies. The network 410 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 410, in addition or alternatively, can also support wired connections between the computing devices 404, 406, including over various types of Ethernet connection.

Although a single server computing device 404 and user computing device 406 are shown in FIG. 4, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

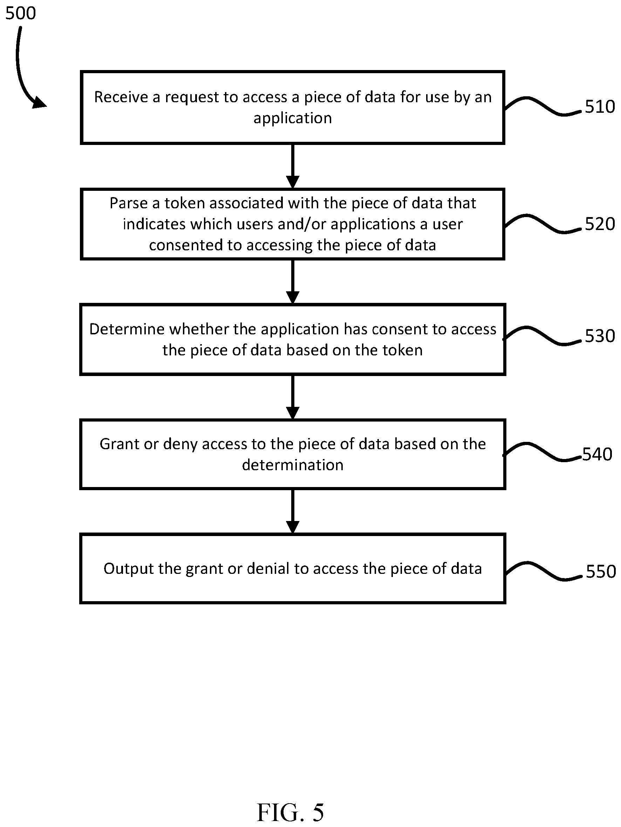

FIG. 5 depicts an example process for enforcing data access according to aspects of the disclosure. The data access can be part of running one or more applications in a cloud computing system. The example process 500 can be performed on a system of one or more processors in one or more locations, such as the dynamic verification system 100 as depicted in FIG. 1.

As shown in block 510, the dynamic verification system 100 receives a request to access a piece of data from a storage system for use by an application. The request can be a read request or a write request for the piece of data. The application can be a video streaming application, a map generation application, a search application, and/or a digital content management application. The storage system can be one or more databases and/or a hierarchy of databases.

As shown in block 520, the dynamic verification system 100 parses a token associated with the piece of data that indicates which applications a user consented to accessing the piece of data. The token can further include which users consented to accessing the piece of data. The tokens may also include for what purposes the users and/or applications can access the piece of data. The token can be a value included as a column in table data with the piece of data. The dynamic verification system 100 may also periodically update the token to update which applications a user consented to accessing the piece of data. The periodic updates may occur every 12 hours or 24 hours as examples.

As shown in block 530, the dynamic verification system 100 determines whether the application has consent to access the piece of data based on the token. The dynamic verification system 100 determines whether the application is included in the token and whether the token indicates the application has relevant access.

As shown in block 540, the dynamic verification system 100 grants or denies access to the piece of data based on the determination.

As shown in block 550, the dynamic verification system 100 outputs the grant or denial to access the piece of data. The dynamic verification system 100 may further output a notification to request access to the piece of data as part of outputting the denial to access the piece of data.

Where the storage system includes a hierarchy of databases, the parsing, determining, and granting or denying as shown respectively in blocks 520, 530, and 540 may be performed by one of the databases of the hierarchy. The other databases of the hierarchy may honor the grant or denial without performing their own parsing and/or determining.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for enforcing data access to run one or more applications in a cloud computing system, the method comprising:
receiving, by one or more processors, a request by an application to access a piece of data in a storage system for use by the application;
parsing, by the one or more processors, a token in the storage system associated with the piece of data that indicates which applications a user consented to accessing the piece of data;
determining, by the one or more processors, whether the application has consent to access the piece of data based on the token;
granting or denying, by the one or more processors, access to the piece of data based on the determination; and
outputting, by the one or more processors, the grant or denial to access the piece of data.

2. The method of claim 1, wherein the request is a read request or a write request for the piece of data.

3. The method of claim 1 or 2, wherein the application comprises at least one of a video streaming application, a map generation application, a search application, or a digital content management application.

4. The method of one of claims 1 to 3,
wherein the token further comprises which users consented to accessing the piece of data; and/or
wherein the token is included as a column in table data.

5. The method of claims 1 to 4, further comprising:
outputting, by the one or more processors, a notification to request access to the piece of data as part of outputting the denial to access the piece of data; and/or
periodically updating, by the one or more processors, the token to update which applications a user consented to accessing the piece of data.

6. The method of one of claims 1 to 5, wherein the storage system is a hierarchy of databases and the parsing, determining, and granting or denying are performed by one of the databases of the hierarchy;
wherein, optionally, the other databases of the hierarchy honor the grant or denial without performing their own determination.

7. A system comprising:
one or more processors; and
one or more storage devices coupled to the one or more processors and storing instructions that, when executed by the one or more processors, cause the one or more processors to perform operations for enforcing data access to run one or more applications in a cloud computing system, the operations comprising:
receiving a request by an application to access a piece of data in a storage system for use by the application;
parsing a token in the storage system associated with the piece of data that indicates which applications a user consented to accessing the piece of data;
determining whether the application has consent to access the piece of data based on the token;
granting or denying access to the piece of data based on the determination; and
outputting the grant or denial to access the piece of data.

8. The system of claim 7, wherein the request is a read request or a write request for the piece of data.

9. The system of claim 6 or 7, wherein the application comprises at least one of a video streaming application, a map generation application, a search application, or a digital content management application.

10. The system of one of claims 6 to 9,
wherein the token further comprises which users consented to accessing the piece of data; and/or
wherein the token is included as a column in table data.

11. The system of one of claims 6 to 10, wherein the operations further comprise:
outputting a notification to request access to the piece of data as part of outputting the denial to access the piece of data; and/or
periodically updating the token to update which applications a user consented to accessing the piece of data.

12. The system of one of claims 6 to 11, wherein the storage system is a hierarchy of databases and the parsing, determining, and granting or denying are performed by one of the databases of the hierarchy wherein, optionally, the other databases of the hierarchy honor the grant or denial without performing their own determination.

13. A non-transitory computer readable medium for storing instructions that, when executed by one or more processors, cause the one or more processors to perform operations for enforcing data access to run one or more applications in a cloud computing system, the operations comprising:
receiving a request by an application to access a piece of data in a storage system for use by the application;
parsing a token in the storage system associated with the piece of data that indicates which applications a user consented to accessing the piece of data;
determining whether the application has consent to access the piece of data based on the token;
granting or denying access to the piece of data based on the determination; and
outputting the grant or denial to access the piece of data.

14. The non-transitory computer readable medium of claim 13, wherein the operations further comprise periodically updating the token to update which applications a user consented to accessing the piece of data.

15. A computer program comprising instructions which, when the program is executed by a computer processor, cause the computer processor to carry out the method of one of claims 1 to 6.
